# EUROPEAN PATENT APPLICATION

(11) **EP 4 753 051 A1**
(43) Date of publication of application: **03.06.2026**
(21) Application number: 25203099.4
(22) Date of filing: 18.09.2025
(51) Int. Cl.: H01M 50/291, H01M 50/289, H01M 50/264, H01M 50/262, H01M 50/258, H01M 50/244, H01M 50/213, H01M 10/613, H01M 10/6568, H01M 10/625

(54) **SECONDARY BATTERY**

(30) Priority: 29.11.2024 KR 20240175438
(71) Applicant: SK On Co., Ltd., Seoul 03161 (KR)
(72) Inventor: PAIK, Hyung Ju, 34124 Daejeon (KR); LEE, Jung Kwan, 34124 Daejeon (KR); JEON, Hae Ryong, 34124 Daejeon (KR); KWAK, Seung Il, 34124 Daejeon (KR); LEE, Dong Gu, 13558 Seongnam-si, Gyeonggi-do (KR)
(74) Representative: Stolmár & Partner Patentanwälte PartG mbB

(57) **Abstract**

A secondary battery is disclosed. According to one aspect of the present disclosure, there is provided a secondary battery comprising a cell assembly comprising battery cells, a frame combined with the battery cells, and a case accommodating the battery cells and the frame, and a housing in which one or more cell assemblies are accommodated, wherein a plurality of frames are provided and disposed adjacently so as to face each other, so that the battery cells are provided between adjacent frames.

## Description

### BACKGROUND

### 1. Field of the Invention

Embodiments of the present disclosure relate to a secondary battery.

### 2. Discussion of Related Art

A secondary battery is one of the energy storage means which can be charged and discharged through electrochemical reactions. The secondary battery may be utilized in various fields in which electrical energy is used. For example, secondary batteries are widely utilized in mobile devices such as a cell phone, a notebook, a tablet, and the like, and are being explored for wider utilization in the field of transportation means such as vehicles, aircraft, ships, and the like. Further, demand for secondary batteries is increasing in the field of energy storage systems (ESSs) for utilizing surplus electricity.

Such secondary batteries are widely used for driving or energy storage in medium and large-sized devices such as electric vehicles or ESSs as well as small devices such as portable electronic devices. In addition, in order to improve power and/or capacity, one battery module may be configured in a form in which a plurality of battery cells are electrically connected to each other, and a plurality of such modules may be connected to form one battery pack.

Recently, cell-to-pack (CTP) technology, which assembles battery cells directly into packs without modularizing the battery cells, has been proposed. According to the cell-to-pack structure, a module housing is omitted or simplified, and thus the space utilization rate is increased, thereby improving energy density, reducing the number of components and processes, and improving manufacturing efficiency.

### SUMMARY

Embodiments of the present disclosure are directed to providing a secondary battery.

In addition, some embodiments of the present disclosure are directed to providing a secondary battery to which a cell-to-pack structure is applied.

In addition, some embodiments of the present disclosure are directed to providing a secondary battery with improved assembly convenience.

In addition, some embodiments of the present disclosure are directed to providing a secondary battery with improved cooling efficiency.

Some embodiments of the present disclosure may be widely applied in the field of green technologies such as an electric vehicle and a battery charging station as well as solar power generation and wind power generation using batteries. Further, some embodiments of the present disclosure may be used in an eco-friendly electric vehicle, a hybrid vehicle, and the like to prevent climate change by suppressing air pollution and greenhouse gas emissions.

According to one aspect of the present disclosure, there is provided a secondary battery comprising: a cell assembly comprising battery cells, a frame combined with the battery cells, and a case accommodating the battery cells and the frame; and a housing in which one or more cell assemblies are accommodated, wherein a plurality of frames are provided and disposed adjacently so as to face each other, so that the battery cells are provided between the adjacent frames.

In some embodiments, the case may be provided so that an inner side surface is supported by the frame.

In some embodiments, some of the frames may be lower frames supporting lower portions of the battery cells and the remaining frames may be upper frames supporting upper portions of the battery cells.

In some embodiments, the inside of the housing may be filled with a filler.

In some embodiments, insulating oil may be accommodated in the housing, and the battery cells may be immersed in the insulating oil.

In some embodiments, the battery cells and the frames may be alternately disposed in a lateral direction.

In some embodiments, the battery cells may be disposed in a plurality of rows.

In some embodiments, adjacent rows of battery cells may be alternately disposed.

In some embodiments, the frame may be provided with a seating groove in which a side surface of the battery cell is seated.

In some embodiments, at least some of the frames may be provided with the seating grooves on both side surfaces.

In some embodiments, at least some of the frames may be provided with the seating groove only on one side surface.

In some embodiments, one of the adjacent frames may have an insertion portion protruding, and the other may have an insertion groove into which the insertion portion is inserted.

In some embodiments, the insertion portion may be press-fitted into the insertion groove.

In some embodiments, at least one of the lower frames and at least one of the upper frames may be connected in a vertical direction.

In some embodiments, the seating groove may be provided with a recessed portion.

In some embodiments, the recesses portion may be open at an upper end and a lower end of the frame.

In some embodiments, a plurality of recessed portions may be provided.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a schematic perspective view of a battery cell according to one embodiment of the present disclosure;
FIG. 2 is a schematic perspective view of an electrode assembly according to one embodiment of the present disclosure;
FIG. 3 is a view schematically illustrating a state in which the electrode assembly of FIG. 2 is wound around a central axis;
FIG. 4 is a view illustrating a state in which electrode tabs at upper and lower ends in the electrode assembly wound as illustrated in FIG. 3 have undergone a flattening process;
FIG. 5 is a schematic perspective view of a secondary battery according to one embodiment of the present disclosure;
FIG. 6 is a schematic perspective view of a cell assembly according to one embodiment of the present disclosure;
FIG. 7 is a cross-sectional view taken along line A-A of the cell assembly of FIG. 6;
FIG. 8 is a perspective view of an electrical connection structure of the cell assembly according to one embodiment of the present disclosure;
FIG. 9 is a perspective view of battery cells and a frame according to one embodiment of the present disclosure;
FIG. 10 is a plan view illustrating a combined structure of the battery cells and the frame according to one embodiment of the present disclosure;
FIG. 11 is a perspective view of battery cells and a frame according to another embodiment of the present disclosure;
FIG. 12 is a front view of the battery cells and the frame illustrated in FIG. 11;
FIG. 13 is a plan view of battery cells and a frame according to still another embodiment of the present disclosure; and
FIG. 14 is a perspective view of a part of the frame illustrated in FIG. 13.

### DETAILED DESCRIPTION OF EXEMPLARY EMBODIMENTS

Hereinafter, the present disclosure will be described in detail with reference to the accompanying drawings. However, this is merely exemplary, and the present disclosure is not limited to the exemplified specific embodiments.

First, battery cells according to embodiments of the present disclosure will be described.

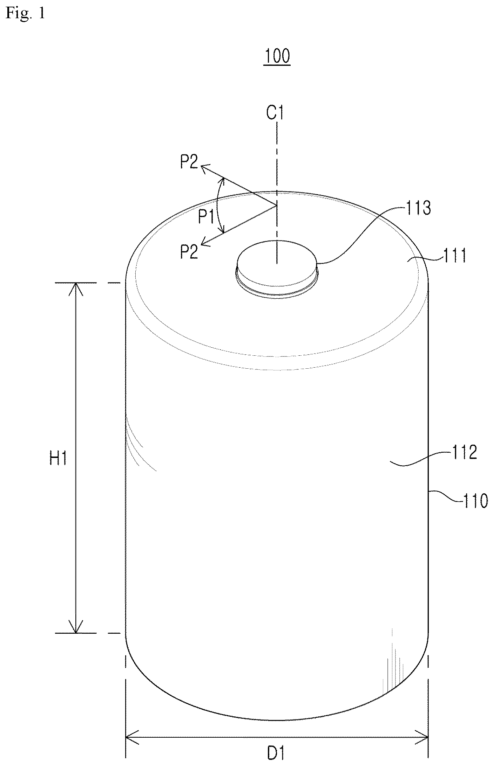

FIG. 1 is a schematic perspective view of a battery cell according to one embodiment of the present disclosure;

Hereinafter, for convenience, a rotation direction around a central axis C1 shown in FIG. 1 is referred to as a circumferential direction P1, an inward-outward direction toward/from the central axis C1 in a plane perpendicular to the central axis C1 is referred to as a radial direction P2, and an up-down direction along the central axis C1 is referred to as a vertical direction.

Referring to FIG. 1, in some embodiments, a battery cell 100 may comprise a can 110. The can 110 may comprise an inner space in which an electrode assembly 120 is accommodated. In some embodiments, the can 110 may have an upper surface 111 and a side surface 112, and may have a cylindrical shape with an open lower portion. Although not illustrated, the opening at the lower portion of the can 110 may be provided to be appropriately closed by a cap plate or the like.

In some embodiments, a rivet 113 may be provided on the upper surface 111 of the can 110. The rivet 113 may function as one electrode terminal. For example, the rivet 113 may function as a positive electrode terminal. In the above, the remaining area of the can 110 excluding the rivet 113 may function as the other electrode terminal corresponding to the rivet 113. For example, the remaining area of the upper surface 111 of the can 110 excluding the rivet 113 may function as a negative electrode terminal. In some embodiments, a gasket for electrical insulation and mechanical sealing may be provided between the rivet 113 and the can 110.

In some embodiments, the can 110 may be provided in a cylindrical shape having a predetermined diameter D1 and height H1. In other words, the battery cell 100 may be provided in the cylindrical shape having the predetermined diameter D1 and height H1. For example, the battery cell 100 may have a diameter of 46 mm and a height of 80 mm. In some cases, the battery cell 100 having such a form factor may be referred to as a '4680 battery.' As another example, the battery cell 100 may have a diameter of 46 mm and a height of 80 mm, a diameter of 46 mm and a height of 95 mm, or a diameter of 46 mm and a height of 110 mm. In some cases, the battery cell 100 having such a form factor may be referred to as a '46xx battery.' In the '46xx', 'xx' may describe a height of the corresponding form factor. As another example, the battery cell 100 may have a diameter of 48 mm and a height of 75 mm, a diameter of 48 mm and a height of 80 mm, or a diameter of 48 mm and a height of 110 mm. In some cases, the battery cell 100 having such a form factor may be referred to as a '48xx battery.' In the '48xx', 'xx' may describe a height of the corresponding form factor. However, in the present disclosure, the diameter D1 and the height H1 of the battery cell 100 may be variously changed, and are not necessarily limited to those exemplified above.

Meanwhile, although the cylindrical battery cell 100 is illustrated in the present description, the form factor of the battery cell 100 according to the embodiments of the present disclosure is not necessarily limited to the exemplified cylindrical type. The battery cell 100 according to the embodiments of the present disclosure may be variously implemented or applied as a coin type, a prismatic type, a pouch type, or other atypical shapes within the scope comprising the technical idea to be described below.

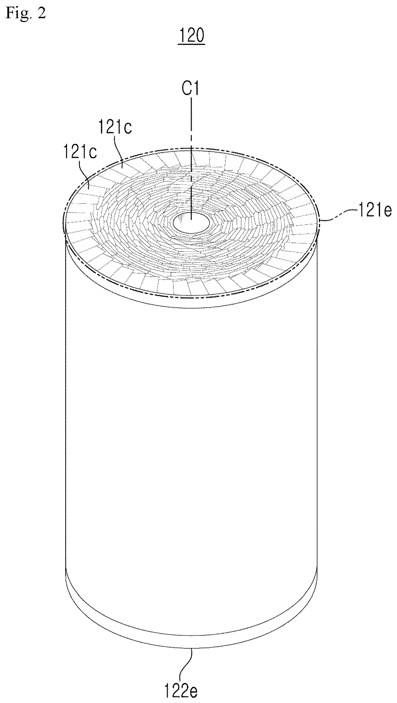

FIG. 2 is a schematic perspective view of an electrode assembly according to one embodiment of the present disclosure.

Referring to FIG. 2, in some embodiments, the battery cell 100 may comprise the electrode assembly 120. The electrode assembly 120 may be accommodated in the can 110 as described above. In some embodiments, the electrode assembly 120 may be wound around the central axis C1 to be provided in the form of a cylindrical roll. Such a roll-shaped electrode assembly 120 may be referred to as a jelly roll or the like in the art.

In some embodiments, the electrode assembly 120 may comprise bonding surfaces 121e and 122e at one or both end portions in a direction of the central axis C1. That is, the electrode assembly 120 may comprise the bonding surfaces 121e and 122e at upper and/or lower end portions, respectively. In the illustrated embodiment, the bonding surfaces 121e and 122e are provided at the upper and lower end portions of the electrode assembly 120, respectively. Hereinafter, for convenience, the bonding surface 121e provided at the upper end of the electrode assembly 120 is referred to as a first bonding surface 121e, and the bonding surface 122e provided at the lower end of the electrode assembly 120 is referred to as a second bonding surface 122e.

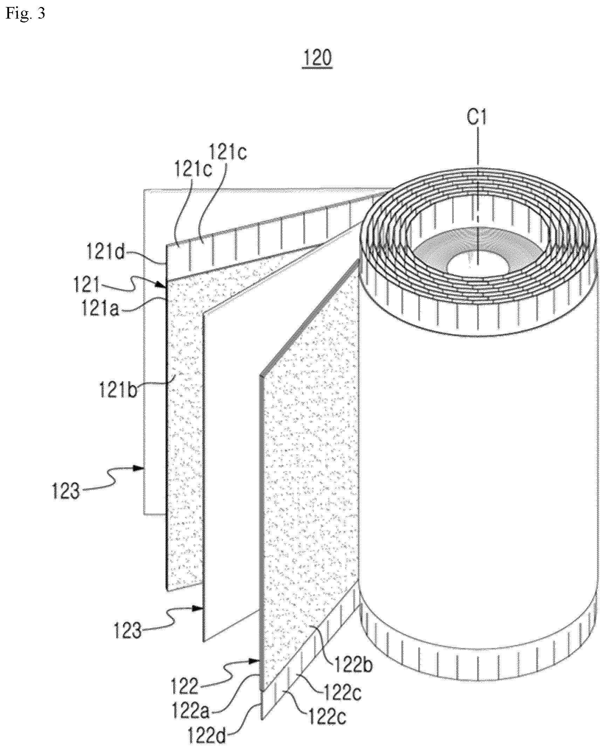

In the above, a plurality of electrode tabs 121c and 122c may be bent toward the central axis C1 at each of the bonding surfaces 121e and 122e. That is, the first bonding surface 121e may have a plurality of first electrode tabs 121c that are bent toward the central axis C1 at the upper end of the electrode assembly 120, and the second bonding surface 122e may have a plurality of second electrode tabs 122c that are bent toward the central axis C1 at the lower end of the electrode assembly 120 (see FIG. 3). In other words, the first bonding surface 121e may be provided as a schematic surface formed by the plurality of bent first electrode tabs 121c, and the second bonding surface 122e may be provided as a schematic surface formed by the plurality of bent second electrode tabs 122c.

In the battery cell 100, the plurality of electrode tabs 121c and 122c may form predetermined bonding surfaces 121e and 122e, and may be electrically connected to an electrode terminal through the bonding surfaces 121e and 122e. That is, in the battery cell 100, a lead tab is omitted, and each bonding surface 121e and 122e may replace the function of the lead tab. In some cases, such a battery cell 100 may be referred to as a tabless battery or the like.

In some embodiments, each of the bonding surfaces 121e and 122e as described above may be bonded to a current collector plate or a cap plate. For example, the first bonding surface 121e may be welded to the current collector plate at the upper end of the electrode assembly 120, and the second bonding surface 122e may be welded to the other current collector plate at the lower end of the electrode assembly 120. As another example, the first bonding surface 121e may be welded to the current collector plate at the upper end of the electrode assembly 120, and the second bonding surface 122e may be welded to the cap plate at the lower end of the electrode assembly 120. Accordingly, the bonding surfaces 121e and 122e may be electrically connected to the current collector plate or the cap plate.

FIG. 3 is a view schematically illustrating a state in which the electrode assembly of FIG. 2 is wound around the central axis.

Referring to FIG. 3, in some embodiments, the electrode assembly 120 may comprise a first electrode 121 and a second electrode 122 with a separator 123 interposed therebetween. The first electrode 121 and/or the second electrode 122 may be electrodes manufactured by an electrode manufacturing device 200. The separator 123 and the first and second electrodes 121 and 122 may be wound around the central axis C1. The first electrode 121 may function as a positive electrode or a negative electrode, and the second electrode 122 may function as a negative electrode or a positive electrode corresponding thereto. In the present description, it is assumed that the first electrode 121 is a positive electrode and the second electrode 122 is a negative electrode.

In some embodiments, the first electrode 121 and the second electrode 122 may respectively comprise metal foils 121a and 122a wound around the central axis C1, active materials 121b and 122b provided on at least one surfaces of the metal foils 121a and 122a, and a plurality of electrode tabs 121c and 122c provided in one end portion areas of the metal foils 121a and 122a along the direction of the central axis C1 and bent toward the central axis C1. For convenience, in the following, the metal foil 121a, the active material 121b, and the electrode tab 121c corresponding to the first electrode 121 will be referred to as a first metal foil 121a, a first active material 121b, and a first electrode tab 121c, respectively, and the metal foil 122a, the active material 122b, and the electrode tab 122c corresponding to the second electrode 122 will be referred to as a second metal foil 122a, a second active material 122b, and a second electrode tab 122c, respectively.

In some embodiments, the first electrode 121 may comprise the first metal foil 121a. For example, the first metal foil 121a may comprise aluminum, stainless steel, nickel, titanium, alloys thereof, or the like. In addition, the first electrode 121 may comprise the first active material 121b provided on at least one surface of the first metal foil 121a. In some embodiments, the first active material 121b may comprise a compound capable of reversibly intercalating and deintercalating lithium ions. For example, the first active material 121b may comprise a lithium-nickel metal oxide, and in some cases, the lithium-nickel metal oxide may further comprise cobalt, manganese, aluminum, and the like.

Similarly, in some embodiments, the second electrode 122 may comprise the second metal foil 122a. For example, the second metal foil 122a may comprise copper, stainless steel, nickel, titanium, alloys thereof, or the like. In addition, the second electrode 122 may comprise the second active material 122b provided on at least one surface of the second metal foil 122a. In some embodiments, the second active material 122b may comprise a compound capable of reversibly intercalating and deintercalating lithium ions. For example, the second active material 122b may comprise a carbon-based material such as crystalline carbon, amorphous carbon, a carbon composite, and a carbon fiber. Alternatively, the second active material 122b may comprise lithium metal, a lithium alloy, a silicon-containing material, a tin-containing material, or the like.

The separator 123 may be provided between the first electrode 121 and the second electrode 122. The separator 123 may be provided to limit an electrical short circuit between the first and second electrodes 121 and 122 and generate a flow of ions. In some embodiments, the separator 123 may comprise a porous polymer film, a porous nonwoven fabric, or the like. For example, the porous polymer film may comprise a polyolefin-based polymer such as an ethylene polymer, a propylene polymer, an ethylene/butene copolymer, an ethylene/hexene copolymer, and an ethylene/methacrylate copolymer. In addition, the porous nonwoven fabric may comprise high melting point glass fibers, polyethylene terephthalate fibers, and the like.

Meanwhile, in some embodiments, the first electrode 121 may comprise the first electrode tab 121c. In the illustrated embodiment, the first electrode tab 121c is provided at an upper end portion of the first electrode 121. As described above, a plurality of first electrode tabs 121c may be provided, and the plurality of first electrode tabs 121c may be disposed in a direction in which the first electrode 121 is wound. In addition, the first electrode tab 121c may be provided in an upper end area of the first metal foil 121a in which the coating of the first active material 121b is omitted. In other words, the first electrode 121 may comprise a first uncoated portion 121d, in which the first active material 121b is not applied, and the first electrode tab 121c may be provided in the first uncoated portion 121d.

Similarly, in some embodiments, the second electrode 122 may comprise the second electrode tab 122c. In the illustrated embodiment, the second electrode tab 122c is provided at a lower end portion of the second electrode 122. The second electrode tab 122c may be provided in a second uncoated portion 122d where the second active material 122b is not applied, and a plurality of second electrode tabs 122c may be provided.

Meanwhile, the separator 123 may be provided between the first electrode 121 and the second electrode 122 as described above. In some embodiments, an upper end portion of the separator 123 may be disposed between the first electrode tab 121c and an upper end of the second electrode 122. The upper end portion of the separator 123 may function to electrically insulate the first electrode tab 121c from the second electrode 122. Similarly, a lower end portion of the separator 123 may be disposed between a lower end of the first electrode 121 and the second electrode tab 122c. The lower end portion of the separator 123 may function to electrically insulate the first electrode 121 from the second electrode tab 122c.

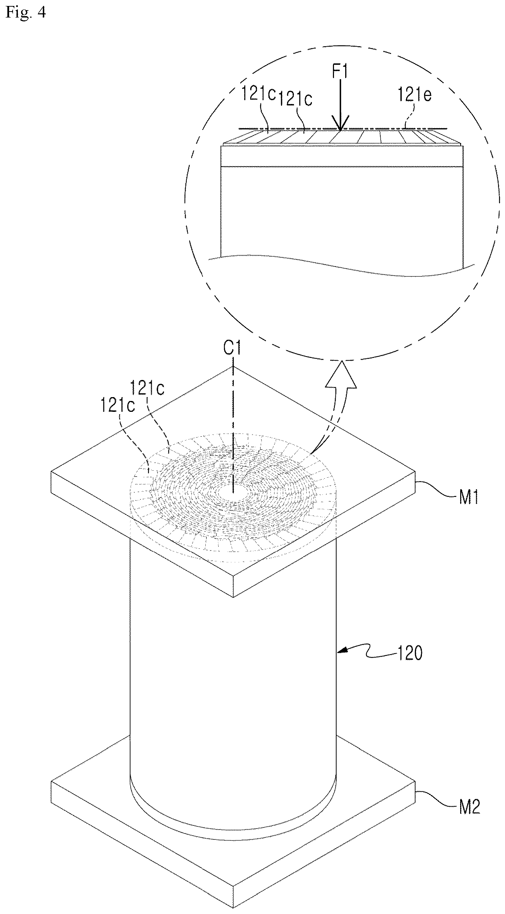

FIG. 4 is a view illustrating a state in which electrode tabs at the upper and lower ends in the electrode assembly wound as illustrated in FIG. 3 have undergone a flattening process.

Referring to FIG. 4, the electrode assembly 120 wound as shown in FIG. 3 may undergo a flattening process in which the first and second electrode tabs 121c and 122c are bent toward the central axis C1 and the bent first and second electrode tabs 121c and 122c are pressed up and down. In the flattening process, the first and second electrode tabs 121c, 122c may be pressed (F1) through predetermined pressing devices M1, M2, respectively, thereby causing the first and second electrode tabs 121c and 122c to form the first and second bonding surfaces 121e and 122e as shown in FIG. 2. Thereafter, a current collector, a cap plate, or the like may be appropriately bonded to the first and second bonding surfaces 121e and 122e, respectively. For example, a current collector may be disposed on the first bonding surface 121e, and the current collector may be welded to the first bonding surface 121e by laser welding.

Next, secondary batteries according to embodiments of the present disclosure will be described.

Meanwhile, the x, y, and z directions mentioned below are intended to explain the present disclosure so that it can be clearly understood, and it goes without saying that each direction may be defined differently depending on where the reference is placed.

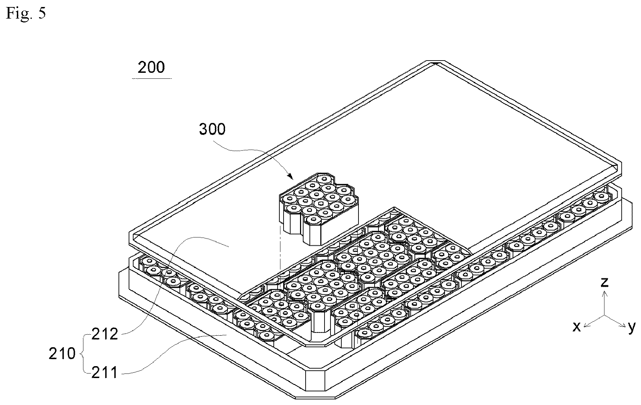

FIG. 5 is a schematic perspective view of a secondary battery according to one embodiment of the present disclosure.

Referring to FIG. 5, in some embodiments, the secondary battery 200 may comprise a cell assembly 300 and a housing 210 in which one or more cell assemblies 300 are accommodated. The cell assembly 300 may comprise a battery cell 100, a frame 310, and a case 320. A plurality of battery cells 100 may be provided and coupled to the frame 310, and the combined battery cells 100 and frame 310 may be accommodated in the case 320. One or more cell assemblies 300 may be accommodated in the housing 210, for example, 24 cell assemblies 300 may be accommodated as illustrated in the drawing. In addition, the cell assembly 300 comprises a plurality of battery cells 100, for example, as illustrated in the drawing, one cell assembly 300 may comprise 16 battery cells 100. That is, the secondary battery 200 illustrated in FIG. 5 comprises a total of 384 battery cells 100. The total number of battery cells 100 comprised in the secondary battery 200 of the present disclosure may be appropriately adjusted in consideration of required power, battery cell capacity, form factor, and the like, and accordingly, the number of battery cells 100 comprised in each cell assembly 300 and the number of cell assemblies 300 accommodated in the housing 210 may be appropriately designed.

Meanwhile, in some embodiments, a plurality of frames 310 may be provided, which are disposed adjacently so as to face each other, and the battery cells 100 may be provided between adjacent frames 310. The plurality of frames 310 may be spaced apart from each other and disposed in the lateral direction, and the battery cells 100 may be provided between adjacent frames 310. In some embodiments, as will be described in detail below, the battery cells 100 and the frames 310 may be alternately disposed in the lateral direction. One row of battery cells 100 may be provided between each adjacent frame 310, and the number of battery cells 100 provided in each row may be the same. According to the repeated arrangement structure of the battery cells 100 and the frames 310, the number of battery cells 100 provided between each frame 310 and the repeated arrangement of the frames 310 and the battery cells 100 are appropriately set, and secondary batteries having various specifications may be produced.

In some embodiments, the frame 310 and the case 320 may be made of an insulating material. Inside the cell assembly 300, the battery cells 100 are disposed to be spatially separated from each other while being combined by the frame 310, and since the frame 310 is made of an insulating material, a short circuit between the battery cells 100 may be prevented. Furthermore, since the case 320 accommodating the cell assembly 300 is made of an insulating material, a short circuit between the cell assemblies 300 may be prevented. In some embodiments, the frame 310 and the case 320 may be made of plastic. In some embodiments, the frame 310 and the case 320 may be injection-molded. Meanwhile, the electrical connection structure between the battery cells 100 in the cell assemblies 300 and the electrical connection structure between the cell assemblies 300 will be described below.

In some embodiments, the housing 210 may comprise a main body 211 and a cover 212. The main body 211 may provide an accommodation space in which one or more cell assemblies 300 may be accommodated. In the main body 211, the accommodation space is open at one side (e.g., an upper side) to accommodate one or more cell assemblies 300, and the cover 212 may cover the one open side of the accommodation space.

In some embodiments, the housing 210 may comprise a cooling system (not shown) for cooling the battery cell 100. The structure of the cooling system is not particularly limited, but for example, a cooling flow path through which cooling water flows may be installed in the accommodation space of the main body 211 to cool the cell assembly 300. Alternatively, as will be described in detail below, insulating oil is accommodated in the housing 210 so that the entire battery cell 100 is immersed, and the cooling system may be a system for cooling and circulating the insulating oil.

In some embodiments, the secondary battery 200 may be a battery pack having a cell-to-pack structure. The cell-to-pack structure is a structure for omitting or simplifying a structure for modularizing a battery cell, and the secondary battery 200 according to the present disclosure may be a battery pack having a cell-to-pack structure in which the battery cell 100 and the cell assembly 300 comprising the case 320 in which the battery cell 100 is accommodated are directly accommodated in the housing 210. Therefore, the space utilization rate may be increased, thereby improving energy density, reducing the number of components and processes, and improving manufacturing efficiency.

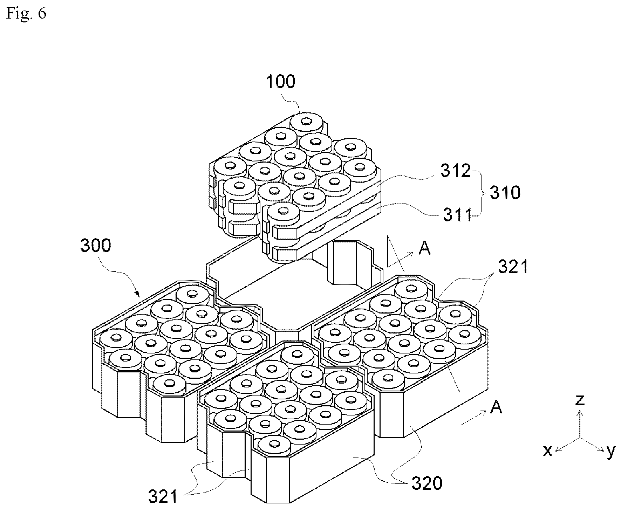

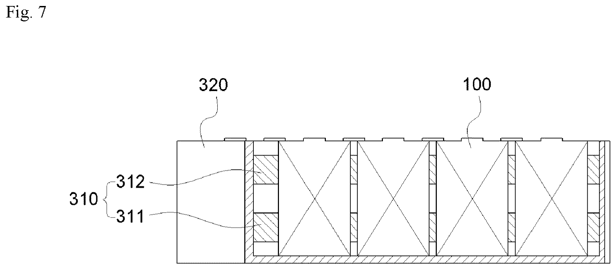

FIG. 6 is a schematic perspective view of a cell assembly according to one embodiment of the present disclosure, and FIG. 7 is a cross-sectional view taken along line A-A of the cell assembly of FIG. 6.

Referring to FIGS. 6 and 7, in some embodiments, the case 320 accommodating the battery cell 100 and the frame 310 may provided with a structure that allows adjacent cases to interlock with each other. For example, the case 320 is provided with a protruding and recessed structure 321 on at least a portion of the outer surface, so that the protruding and recessed structures 321 of adjacent cases may interlock with each other. In the drawing, it is exemplified that the protruding and recessed structures 321 are provided on both side surfaces of the case 320 in the x-direction, so that adjacent cases in the x-direction interlock with each other. Due to the interlocking structure between the cases 320, a support force between the cell assemblies 300 accommodated in the housing 210 is reinforced, thereby improving structural stability.

In some embodiments, the case 320 may be provided such that an inner surface thereof is supported by the frame 310. The case 320 and the frame 310 are supported by each other, and an empty space inside the case 320 is minimized and energy density may be secured. In addition, as will be described in detail below, the battery cells 100 and the frame 310 are alternately disposed in the lateral direction (y-direction based on the drawing), and adjacent frames 310 and the battery cells 100 therebetween may be combined by a coupling force between adjacent frames 310. By alternately arranging and combining the battery cells 100 and the frames 310, convenience in assembling the cell assembly 300 may be improved, and the support and fixing of the battery cell 100 may be easily performed. In addition, when the battery cells 100 and the frames 310 combined with each other are inserted into the case 320, the frames 310 are supported on the inner surface of the case 320 and the coupling of adjacent frames 310 may be prevented from being released. Therefore, the combining of the battery cells 100 and the frames 310 may be maintained and stability may be secured.

In some embodiments, some of the frames 310 may be lower frames 311 supporting lower portions of the battery cells 100, and the remainder may be upper frames 312 supporting upper portions of the battery cells 100. That is, the frame 310 may comprise the lower frame 311 and the upper frame 312. The lower frame 311 and the upper frame 312 may be spaced apart from each other in the vertical direction, that is, in the z-direction. As the lower frame 311 and the upper frame 312 are vertically spaced apart from each other and are combined with the battery cells 100, the structural stability of the battery cell 100 and the frame 310 may be secured while minimizing the volume and weight of the frame 310. Furthermore, since a contact area between the battery cell 100 and the frame 310 may be minimized, the cooling efficiency of the battery cell 100 may be improved.

In some embodiments, the inside of the housing 210 may be filled with a filler. That is, after one or more cell assemblies 300 are accommodated in the accommodation space of the housing 210, the filler may be filled. The filler may be filled in the housing 210 and then cured to fix the cell assembly 300 to the housing 210. The filler may be, for example, a foamed urethane-based material. The filler may be filled in the space between the cell assemblies 300 inside the housing 210, and may also be filled in the space between the case 320, the battery cell 100, and the frame 310 inside the cell assembly 300.

In some embodiments, insulating oil may be accommodated in the housing 210, and the battery cell 100 may be immersed in the insulating oil. The entire battery cell 100 may be immersed in the insulating oil in the housing 210, and a cooling system for circulating and cooling the insulating oil may be provided in the housing 210, so that the insulating oil may be circulated and the battery cell 100 may be cooled. The insulating oil is a fluid having insulating performance, and may be any one of hydrofluoroether, fluoroketone, and ethylene glycol. The main body 211 may be provided with an inlet port and an outlet port connected to the accommodation space, and the insulating oil may circulate through the inlet/outlet port to cool the battery cell 100. The cooling system may comprise a pump for circulating the insulating oil, a chiller for cooling the refrigerant, and a heat exchanger for exchanging heat between the refrigerant and the insulating oil. In addition, the insulating oil accommodated inside the housing 210 may protect the battery cell 100 from external contaminants.

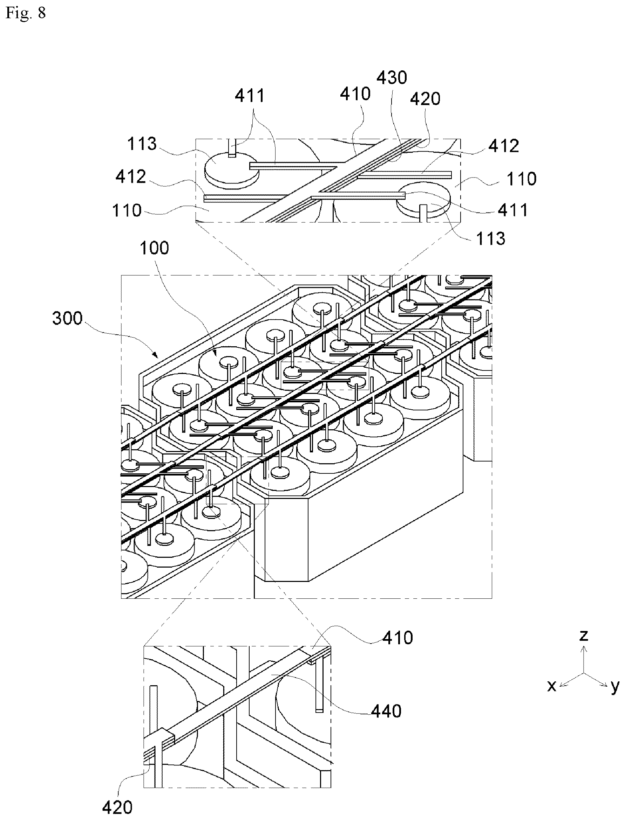

FIG. 8 is a perspective view of an electrical connection structure of the cell assembly according to one embodiment of the present disclosure.

Referring to FIG. 8, in some embodiments, the battery cells 100 of the cell assembly 300 may be electrically connected by a first bus bar 410 and a second bus bar 420. Furthermore, adjacent cell assemblies 300 may be electrically connected by a connection portion 440.

In some embodiments, the first bus bar 410 may be a positive electrode bus bar and comprise a plurality of first branches 411 electrically connected to the rivets 113 of the battery cells 100, respectively. In addition, the second bus bar 420 may be a negative electrode bus bar and comprise a plurality of second branches 412 electrically connected to the cans 110 of the battery cells 100. An insulating portion 430 may be provided between the first bus bar 410 and the second bus bar 420. That is, the battery cells 100 of each cell assembly 300 may be connected in parallel to each other by the first bus bar 410 and the second bus bar 420. In addition, the first bus bar 410 of one cell assembly 300 and the second bus bar 420 of another cell assmbly 300 among adjacent cell assemblies 300 are connected to the connection portion 440, and adjacent cell assemblies 300 may be connected in series to each other. One end of the connection portion 440 may be connected to the first bus bar 410 of one cell assembly 300, and the other end thereof may be connected to the second bus bar 420 of the other cell assembly 300. The connection portion 440 and the first and second bus bars 410 and 420 on both sides connected thereto may be integrally provided. The first branch 411 may be welded to the rivet 113, and the second branch 412 and the second bus bar 420 may be welded to the can 110. However, the electrical connection structure by the first and second bus bars 410 and 420 is merely exemplary, and the electrical connection structure of the battery cell 100 and the cell assembly 300 may also have other structures.

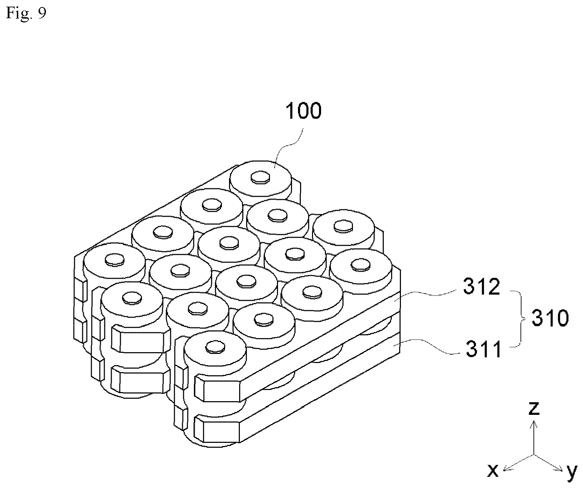

FIG. 9 is a perspective view of battery cells and a frame according to one embodiment of the present disclosure.

Referring to FIG. 9, in some embodiments, a plurality of frames 310 are provided, which are disposed adjacently so as to face each other, and the battery cells 100 may be provided between adjacent frames 310. The frames 310 are disposed to face each other in the y-direction, and the battery cells 100 may be provided between adjacent frames 310. Adjacent frames 310 may be coupled to each other, for example, by an insertion portion 314 and an insertion groove 315 to be described below. The battery cells 100 and the frames 310 provided therebetween may be coupled to each other by the coupling force between adjacent frames 310. In addition, as described above, the battery cells 100 and the frames 310 combined with each other are inserted into the case 320, and the inner surface of the case 320 is supported by the frames 310, so that the combining of the battery cells 100 and the frames 310 may be maintained and stability may be secured.

In some embodiments, the upper frames 312 may be coupled to each other, and the lower frames 311 may be coupled to each other. A z-direction position of the upper frame 312 with respect to the battery cell 100 may be maintained by the coupling force between the upper frames 312. Likewise, the z-direction position of the lower frame 311 with respect to the battery cell 100 may be maintained by the coupling force between the lower frames 311. Meanwhile, in some embodiments, as will be described in detail below, some lower frames 311 and some upper frames 312 may be connected to each other, and a z-direction interval between the lower frame 311 and the upper frame 312 may be maintained.

In some embodiments, the battery cells 100 and the frames 310 may be alternately disposed in the lateral direction. That is, the battery cells 100 and the frames 310 may be alternately disposed one by one in the y-direction. The frames 310 may be provided at the outermost sides in the y-direction, and the battery cells 100 and the frames 310 may be alternately disposed therebetween. By alternately arranging and combining the battery cells 100 and the frames 310, convenience in assembling the cell assembly 300 may be improved, and the support and fixing of the battery cell may be easily performed.

In some embodiments, the battery cells 100 may be disposed in a plurality of rows. The plurality of battery cells 100 comprised in the cell assembly 300 may be disposed in a plurality of rows. The battery cells 100 form one row in the x-direction, and a plurality of such rows may be disposed in the y-direction. The frames 310 may be supported on both y-direction side surfaces of each row of battery cells 100. A plurality of frames 310 may be provided and disposed adjacent to each other, and one row of battery cells 100 may be provided between adjacent frames 310.

In some embodiments, the battery cells 100 may be arranged such that adjacent rows are staggered. One row of battery cells 100 and the row adjacent thereto may be alternately disposed in the x-direction. Accordingly, the y-direction spacing between adjacent rows may be reduced, and energy density may be improved.

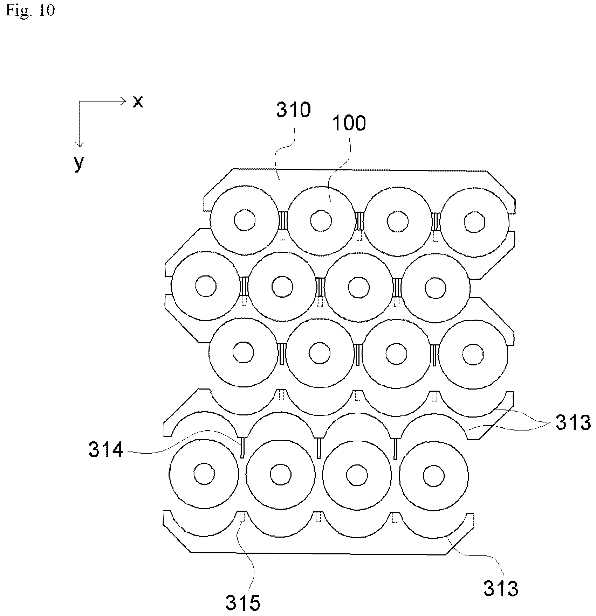

FIG. 10 is a plan view illustrating a combined structure of the battery cells and the frame according to one embodiment of the present disclosure.

Referring to FIG. 10, in some embodiments, the frame 310 may be provided with a seating groove 313 in which a side surface of the battery cell 100 is seated. The seating groove 313 may be provided in a substantially semicircular shape corresponding to the shape of the side surface of the battery cell 100. However, a central angle of the seating groove 313 may be less than 180 degrees so that adjacent frames 310 are spaced apart from each other without coming into contact with each other. The seating grooves 313 may be provided on opposing surfaces of the frames 310. That is, the seating grooves 313 of adjacent frames 310 may be disposed so as to face each other. Between adjacent frames 310, the battery cells 100 may be respectively inserted into the seating grooves of both frames 310. The seating grooves 313 may be provided in both the upper frame 312 and the lower frame 311.

In some embodiments, the seating grooves 313 provided on the same surface in each frame 310 may be spaced apart from each other. That is, the seating grooves 313 may be spaced apart from each other in the x-direction. Therefore, the battery cells 100 inserted into the seating grooves 313 may also be spaced apart from each other. Therefore, not only a short circuit between the battery cells 100 may be prevented, but also a space in which a filler can be filled or insulating oil can circulate may be provided between the battery cells 100.

In some embodiments, at least some of the frames 310 may be provided with the seating grooves 313 on both side surfaces. In addition, in some embodiments, at least some of the frames 310 may be provided with the seating groove 313 only on one side surface. Thus, the outermost frame 310 may be provided with the seating grooves 313 only on the inner surface in the y-direction, and the remaining frames 310 may be provided with the seating grooves 313 on both side surfaces in the y-direction so that the battery cells 100 can be disposed alternately in the y direction.

In some embodiments, in the frames 310 provided with the seating grooves 313 on both side surfaces, the seating groove 313 provided on one side surface and the seating groove 313 provided on the other side surface may be provided in a staggered manner. That is, the seating grooves 313 of adjacent frames 310 are provided at the same location in the x-direction, but the frames 310 with the seating grooves 313 on both side surfaces may have the seating grooves 313 on one side surface and the seating grooves 313 on the other side surface that are staggered in the x-direction. Accordingly, adjacent rows of the battery cells 100 are disposed in a staggered manner, and energy density may be improved.

In some embodiments, the insertion portion 314 may protrude from one of adjacent frames 310, and the insertion groove 315 into which the insertion portion 314 is inserted may be provided in the other. Adjacent frames 310 may be coupled to each other by a coupling force generated as the insertion portion 314 is inserted into the insertion groove 315. In addition, the battery cell 100 may be seated in the two-sided seating grooves 313 between adjacent frames 310 and may be combined with the frame 310. In some embodiments, the insertion portion 314 may be press-fitted into the insertion groove 315. That is, the structure in which the frames 310 are coupled to each other on both sides with the battery cell 100 interposed therebetween is repeated, and the battery cell 100 and the frame 310 may be easily combined. Therefore, convenience in assembling the cell assembly 300 may be improved, and the battery cell may be easily supported and fixed.

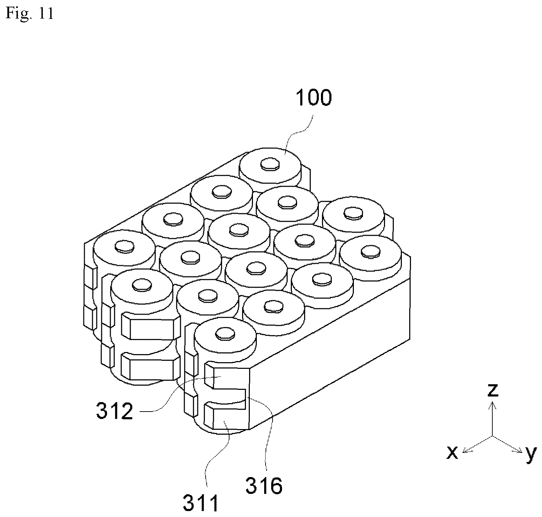

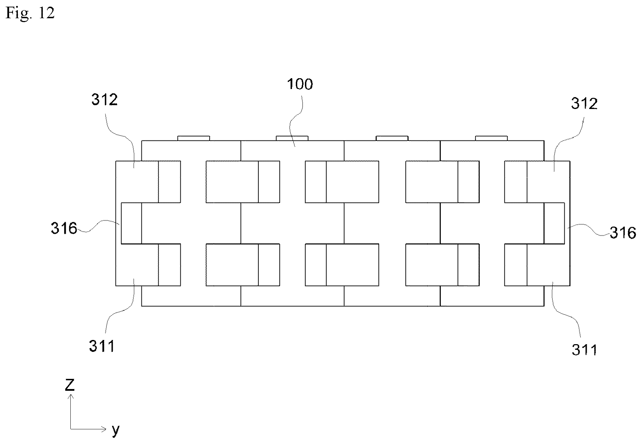

FIG. 11 is a perspective view of battery cells and a frame according to another embodiment of the present disclosure and FIG. 12 is a front view of the battery cells and the frame illustrated in FIG. 11.

Referring to FIGS. 11 and 12, in some embodiments, at least one of the lower frames 311 and at least one of the upper frames 312 may be connected in the vertical direction. Among the lower frames 311 and the upper frames 312 alternately disposed with the battery cells 100 in the y-direction, the outermost lower frame 311 and upper frame 312 may be connected to each other in the vertical direction. The frame 310 may comprise a connection portion 316 connecting the lower frame 311 and the upper frame 312. The upper frame 312 and the lower frame 311 may be coupled to each other by the insertion portion 314 and the insertion groove 315, and some upper frames 312 and some lower frames 311 may be connected to each other by the connection portion 316. The interval in the z-direction between the upper frame 312 and the lower frame 311 may be kept constant by the connection portion 316. For example, when insulating oil is accommodated inside the housing 210, a flow path for insulating oil to flow between the upper frame 312 and the lower frame 311 may be kept constant. Therefore, cooling of the battery cells 100 is performed uniformly in the cell assembly 300, and a temperature difference may be minimized.

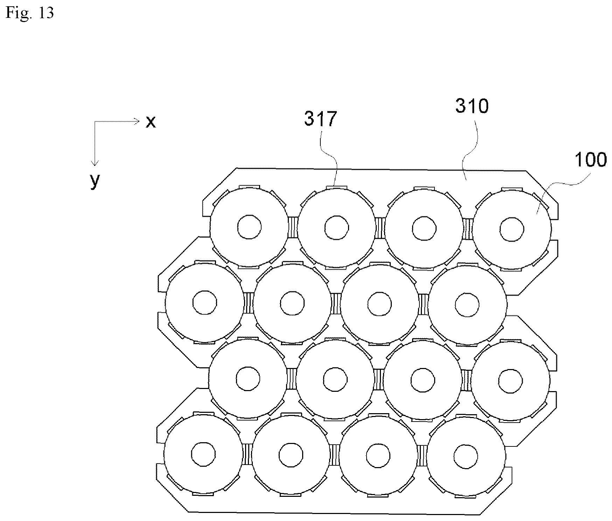

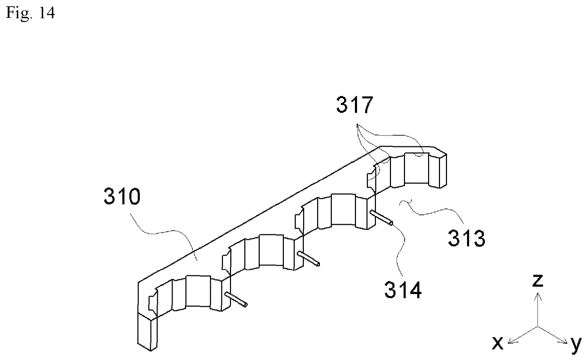

FIG. 13 is a plan view of battery cells and a frame according to still another embodiment of the present disclosure and FIG. 14 is a perspective view of a part of the frame illustrated in FIG. 13.

Referring to FIGS. 13 and 14, in some embodiments, the seating groove 313 may be provided with a recessed portion 317. The recessed portion 317 may be provided by recessing the seating groove 313 (referring to FIG. 1, recessed in the direction P2). As the recessed portion 317 is provided, a contact area between the frame 310 and the battery cell 100 may be further reduced.

In some embodiments, the recessed portion 317 may be open at the upper and lower ends of the frame 310. That is, the recessed portion 317 may be open on both sides in the z-direction. Therefore, the recessed portion 317 may be filled with a filler or insulating oil may be circulated through the recessed portion 317. The recessed portion 317 is filled with a filler, and structural stability of the combining between the frame 310 and the battery cell 100 may be further improved. Alternatively, the insulating oil is circulated through the recessed portion 317, and a contact area between the battery cell 100 and the insulating oil is increased, so that the cooling efficiency may be further enhanced.

In some embodiments, a plurality of recessed portions 317 may be provided. The plurality of recessed portions 317 may be provided to be spaced apart from the seating groove 313 in a circumferential direction (referring to FIG. 1, in the direction P1). In the drawing, a form in which three recessed portions 317 are provided is illustrated as an example. As a plurality of recessed portions 317 are provided, a contact area between the frame 310 and the battery cell 100 may be further reduced, structural stability may be further improved by filling a filler, or insulating oil may be accommodated, and cooling efficiency may be further improved.

According to the secondary battery with such a structure, the space utilization rate is increased, thereby improving energy density, reducing the number of components and processes, and improving manufacturing efficiency. In addition, assembly convenience may be improved, and the battery cells may be easily supported and fixed. In addition, the cooling efficiency of the battery cell may be improved. In addition, secondary batteries having various specifications may be easily produced.

Embodiments of the present disclosure can provide a secondary battery.

In addition, some embodiments of the present disclosure can provide a secondary battery to which a cell-to-pack structure is applied.

In addition, some embodiments of the present disclosure can provide a secondary battery with improved assembly convenience.

In addition, some embodiments of the present disclosure can provide a secondary battery with improved cooling efficiency.

Some of the aspects of the present disclosure are as follows:
Aspect 1: A secondary battery (200) comprising: a cell assembly (300) comprising battery cells (100), a frame (310) combined with the battery cells (100), and a case (320) accommodating the battery cells (100) and the frame (310); and a housing (210) in which one or more cell assemblies (300) are accommodated, wherein a plurality of frames (310) are provided and disposed adjacently so as to face each other, so that the battery cells (100) are provided between the adjacent frames (310).
Aspect 2: The secondary battery (200) of aspect 1, wherein the case (320) is provided so that an inner side surface is supported by the frame (310).
Aspect 3: The secondary battery (200) according to any one of the preceding aspects, wherein some of the frames (310) are lower frames (311) supporting lower portions of the battery cells (100) and the remaining frames are upper frames (312) supporting upper portions of the battery cells (100).
Aspect 4: The secondary battery (200) according to any one of the preceding aspects, wherein an inside of the housing (210) is filled with a filler.
Aspect 5: The secondary battery (200) according to any one of the preceding aspects, wherein insulating oil is accommodated in the housing (210), and the battery cells (100) are immersed in the insulating oil.
Aspect 6: The secondary battery (200) according to any one of the preceding aspects, wherein the battery cells (100) and the frames (310) are alternately disposed in a lateral direction.
Aspect 7: The secondary battery (200) according to any one of the preceding aspects, wherein the frame (310) is provided with a seating groove(313) in which a side surface of the battery cell (100) is seated.
Aspect 8: The secondary battery (200) according to any one of the preceding aspects, wherein at least some of the frames (310) are provided with the seating grooves (313) on both side surfaces.
Aspect 9: The secondary battery (200) according to any one of the preceding aspects, wherein at least some of the frames (310) are provided with the seating grooves (313) only on one side surface.
Aspect 10: The secondary battery (200) according to any one of the preceding aspects, wherein one of the adjacent frames (310) has an insertion portion (314) protruding, and the other has an insertion groove (315) into which the insertion portion (314) is inserted.
Aspect 11: The secondary battery (200) according to any one of the preceding aspects, wherein the insertion portion (314) is press-fitted into the insertion groove (315).
Aspect 12: The secondary battery (200) according to any one of the preceding aspects, wherein at least one of the lower frames (311) and at least one of the upper frames (312) are connected in a vertical direction.
Aspect 13: The secondary battery (200) according to any one of the preceding aspects, wherein the seating groove (313) is provided with a recessed portion (317).
Aspect 14: The secondary battery (200) according to any one of the preceding aspects, wherein the recesses portion (317) is open at an upper end and a lower end of the frame (310).
Aspect 15: The secondary battery (200) according to any one of the preceding aspects, wherein a plurality of recessed portions (317) are provided.

The above description is only an example to which the principle of the present disclosure is applied, and other configurations may be further comprised without departing from the scope of the present disclosure.

## Claims

1. A secondary battery (200) comprising:
a cell assembly (300) comprising battery cells (100), a frame (310) combined with the battery cells (100), and a case (320) accommodating the battery cells (100) and the frame (310); and
a housing (210) in which one or more cell assemblies (300) are accommodated,
wherein a plurality of frames (310) are provided and disposed adjacently so as to face each other, so that the battery cells (100) are provided between the adjacent frames (310).

2. The secondary battery (200) of claim 1, wherein the case (320) is provided so that an inner side surface is supported by the frame (310).

3. The secondary battery (200) according to any one of the preceding claims, wherein some of the frames (310) are lower frames (311) supporting lower portions of the battery cells (100) and the remaining frames are upper frames (312) supporting upper portions of the battery cells (100).

4. The secondary battery (200) according to any one of the preceding claims, wherein an inside of the housing (210) is filled with a filler.

5. The secondary battery (200) according to any one of the preceding claims, wherein insulating oil is accommodated in the housing (210), and the battery cells (100) are immersed in the insulating oil.

6. The secondary battery (200) according to any one of the preceding claims, wherein the battery cells (100) and the frames (310) are alternately disposed in a lateral direction.

7. The secondary battery (200) according to any one of the preceding claims, wherein the frame (310) is provided with a seating groove(313) in which a side surface of the battery cell (100) is seated.

8. The secondary battery (200) according to any one of the preceding claims, wherein at least some of the frames (310) are provided with the seating grooves (313) on both side surfaces.

9. The secondary battery (200) according to any one of the preceding claims, wherein at least some of the frames (310) are provided with the seating grooves (313) only on one side surface.

10. The secondary battery (200) according to any one of the preceding claims, wherein one of the adjacent frames (310) has an insertion portion (314) protruding, and the other has an insertion groove (315) into which the insertion portion (314) is inserted.

11. The secondary battery (200) according to any one of the preceding claims, wherein the insertion portion (314) is press-fitted into the insertion groove (315).

12. The secondary battery (200) according to any one of the preceding claims, wherein at least one of the lower frames (311) and at least one of the upper frames (312) are connected in a vertical direction.

13. The secondary battery (200) according to any one of the preceding claims, wherein the seating groove (313) is provided with a recessed portion (317).

14. The secondary battery (200) according to any one of the preceding claims, wherein the recesses portion (317) is open at an upper end and a lower end of the frame (310).

15. The secondary battery (200) according to any one of the preceding claims, wherein a plurality of recessed portions (317) are provided.
